# EUROPÄISCHE PATENTSCHRIFT

(11) **EP 1 950 119 B1**
(45) Veröffentlichungstag und Bekanntmachung des Hinweises auf die Patenterteilung: **04.04.2012**
(21) Anmeldenummer: 08100072.1
(22) Anmeldetag: 03.01.2008
(51) Int. Cl.: B62B 9/14

(54) **Kinderwagen**
Pushchair
Poussette

(30) Priorität: 25.01.2007 DE 202007001111 U
(43) Veröffentlichungstag der Anmeldung: 30.07.2008
(73) Patentinhaber: teutonia Kinderwagenfabrik GmbH, 32120 Hiddenhausen (DE)
(72) Erfinder: Bohnenberger, Ralf, 32052, Herford (DE)
(74) Vertreter: Metten, Karl-Heinz

(56) Entgegenhaltungen:
- DE-C- 854 754
- US-A- 4 741 551
- US-A- 6 139 046

## Beschreibung

Die Erfindung bezieht sich auf einen Kinderwagen gemäß dem Oberbegriff von Anspruch 1, wie er von der US-A-6,139,046 gezeigt wird.

Die in Rede stehenden Kinderwagen sind in vielen Ausführungen bekannt. Das Fahrgestell ist mit den Laufrädern ausgestattet und bildet auch das tragende Bauteil eines Kinderwagens. An dem Fahrgestell ist darüber hinaus der Schiebebügel festgelegt. Das Verdeck ist üblicherweise ein Klappverdeck, welches in einen zusammengeklappten Zustand gebracht werden kann. Der Sitz- und/oder der Liegeeinsatz ist mit einer Polsterung versehen. Die Armlehnen bieten darüber hinaus einen Schutz für das Kind. Insbesondere bei sommerlichen Temperaturen wird der Sonnenschirm benötigt, damit das im Kinderwagen sitzende oder liegende Kind gegen die Sonneneinstrahlung geschützt ist. Der Sonnenschirm besteht üblicherweise aus einem Stiel, einem Spanngestell und einem Bezugsstoff.

Bei den bisher gebräuchlichen Sonnenschirmen ist am unteren Ende des Stieles ein Einsteckteil angeordnet und dieses Einsteckteil wird in ein Klemmelement eingebracht, welches an beliebiger Stelle an einem Rohr des Fahrgestells positioniert wird. Dieses Klemmelement ist üblicherweise zweiteilig und wird mittels eine Klemmschraube in eine solche Form gebracht, dass dieses Klemmelement festsitzt. Da es sich bei diese Verbindung um einen reinen Kraftschluss handelt, kann es passieren, dass sich diese Verbindung im Laufe der Zeit löst, so dass es dann zu einer Verschiebung kommt. Dieser Umstand wird von den Benutzern als Nachteil empfunden. Es ist jedoch auch möglich, das Klemmelement von dem Rohr abzunehmen, was jedoch von den Benutzern auch als recht umständlich angesehen wird. Darüber hinaus kann bauartbedingt die Positionierung des Sonnenschirmes ungünstig für das in dem Kinderwagen sitzende oder liegende Kind sein.

Der Erfindung liegt die Aufgabe zugrunde, einen Kinderwagen der eingangs näher beschriebenen Art so zu gestalten, dass auf das Klemmelement verzichtet werden kann, und dass trotzdem ohne Zuhilfenahme von Werkzeugen der Sonnenschirm am Kinderwagen positioniert werden kann und dass gegebenenfalls auch der Sonnenschirm in einer für das Kind günstigeren Position festgelegt werden kann.

Die gestellte Aufgabe wird durch einen Kinderwagen gemäß Anspruch 1 gelöst.

Im Gegensatz zu den bekannten Ausführungen wird nunmehr das Einsteckteil zur Festlegung des Sonnenschirmes am Kinderwagen benutzt. Am Kinderwagen selbst muss dann ein entsprechendes Gegenstück angesetzt, an- oder eingeformt sein, um die form- und/oder kraftschlüssige Festlegung zu erreichen. Durch diese Festlegung wird auch ein Lösen oder ein Verschieben des Sonnenschirmes verhindert.

In einer Armlehne oder in beiden Armlehnen ist jeweils eine Aufnahme für das Einsteckteil des Sonnenschirmes vorgesehen . Es ist dann möglich, den Sonnenschirm wahlweise an einer der beiden Armlehnen festzulegen. Dadurch wird eine optimale Positionierung für das im Kinderwagen sitzende oder liegende Kind erreicht. Die Einbringung der Aufnahme in eine oder in beide Armlehnen bietet den Vorteil, dass sich das äußere Erscheinungsbild des Kinderwagens nur unwesentlich ändert.

In der bevorzugten Ausführung ist die Aufnahme für das Einsteckteil eine in die Armlehne integrierte Ausnehmung, wodurch sich die form- und/oder kraftschlüssige Verbindung in einfachster Weise realisieren lässt.

Die Armlehne und auch das Einsteckteil sind aus einem Kunststoff hergestellt. Dadurch lassen sich die form- und materialfedernden Eigenschaften dieser Werkstoffe ausnutzen. Darüber hinaus ist es fertigungstechnisch einfach, da das Einsteckteil durch Umspritzen des freien Endbereiches des Stieles hergestellt werden kann.

Besonders vorteilhaft ist, wenn die Verbindungsbereiche zwischen der jeweiligen Aufnahme und dem Einsteckteil nach Art eines Steckverbinders, eines Bajonettverschlusses oder dergleichen gestaltet sind, da diese einfach zu handhaben sind.

Anhand der beiliegenden Zeichnung wird die Erfindung noch näher erläutert.

### Es zeigt:

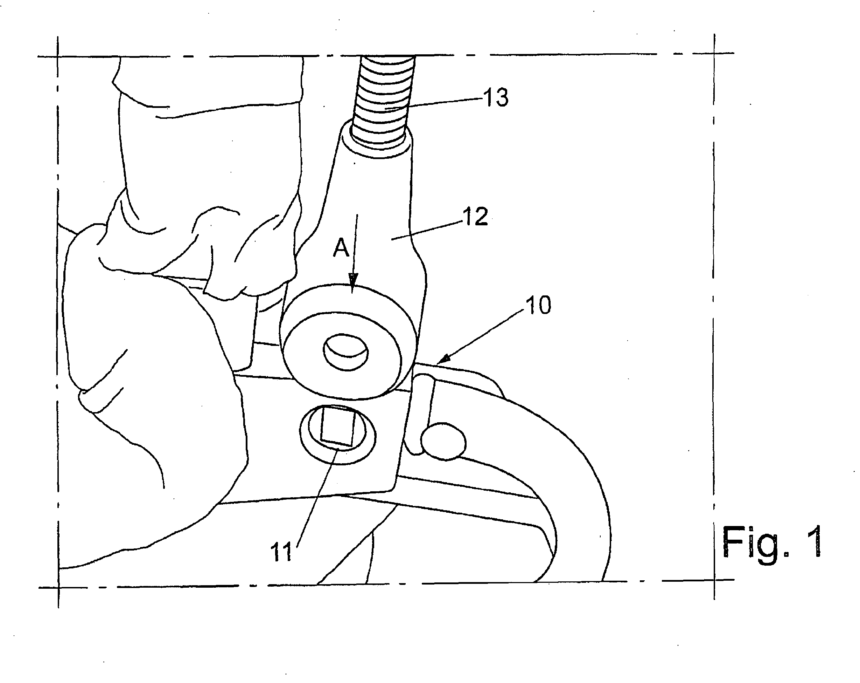

- Figur 1: eine Teilseitenansicht eines Kinderwagens, die Aufnahme in der Armlehne mit dem Einsteckteil zeigend.

Aus Gründen der vereinfachten Darstellung ist der Kinderwagen als Ganzes nicht dargestellt. Der Kinderwagen ist mit zwei seitlichen sowie beabstandeten Armlehnen 10 ausgestattet, deren Gestaltung vom Typ des Kinderwagens abhängig sind. In wenigstens eine der Armlehnen 10 ist im dargestellten Ausführungsbeispiel eine Aufnahme 11 vorgesehen, in die ein entsprechend gestaltetes Einsteckteil 12 als Gegenstück einbringbar ist. Die Anordnung ist so getroffen, dass das Einsteckteil 12 form- und/oder kraftschlüssig an der Armlehne 10 festgelegt ist. Die Verbindungsbereiche sind so gestaltet, dass das Einsteckteil 12 fest, jedoch abnehmbar, an der Armlehne 10 angeordnet ist. Wie durch den Pfeil "A" angedeutet, wird das Einsteckteil 12 durch eine Kraftaufbringung an der Armlehne 10 festgelegt. Das Einsteckteil 12 ist durch Umspritzen des freien Endbereiches des Stieles 13 hergestellt. Die Aufnahme 11 ist von der Seite zugänglich, um beispielsweise durch eine Druckkraft die Verbindung zu entriegeln, damit der Schirm vom Wagen abgenommen werden kann.

Die Erfindung ist nicht auf das dargestellte Ausführungsbeispiel beschränkt. Wesentlich ist, dass zunächst das Einsteckteil 12 an der Armlehne 10 des Kinderwagens abnehmbar festgelegt ist. Darüber hinaus ist von Bedeutung, dass die Verbindungsbereiche der Armlehne 10 und des Einsteckteiles 12 so gestaltet sind, dass keine zusätzlichen Sicherungselemente notwendig sind.

## Patentansprüche

1. Kinderwagen, mit einem Fahrgestell, einem Schiebebügel, einem Verdeck, einem Sitz-und/oder Liegeeinsatz, dem seitlich angeordnete Armlehnen zugeordnet sind, und bei dem ein Sonnenschirm positionierbar ist, dessen Stiel in einem Einsteckteil festgelegt ist, **dadurch gekennzeichnet, dass** in einer Armlehne (10) oder in beiden Armlehnen (10) des Kinderwagens wenigstens eine integrierte Aufnahme (11) zur form- und/oder kraftschlüssigen Festlegung des Einsteckteiles (12) des Sonnenschirmes vorgesehen ist.

2. Kinderwagen nach Anspruch 1, **dadurch gekennzeichnet, dass** jede Aufnahme (11) für das Einsteckteil (12) eine in die Armlehne (10) oder in die Armlehnen (10) integrierte Ausnehmung ist.

3. Kinderwagen nach Anspruch 1 oder 2, **dadurch gekennzeichnet, dass** die Verbindungsbereiche zwischen der jeweiligen Aufnahme (11) und dem Einsteckteil (12) nach Art eines Steckverbinders, eines Bajonettverschlusses oder dergleichen gestaltet sind.

4. Kinderwagen nach einem oder mehreren der vorstehenden Ansprüche, **dadurch gekennzeichnet, dass** das Einsteckteil (12) durch Umspritzen des freien Endbereiches des Stieles (13) gebildet ist, und dass das Einsteckteil aus einem Kunststoff besteht und als Kunststoffformteil gestaltet ist.

## Claims

1. A pram with a frame, a handle bar, a canopy, a seat and/or lounger insert to which arm rests are assigned which are arranged at the sides, and with which a parasol can be positioned, the pole of which is affixed in an insertion part, **characterized in that** in one arm rest (10) or in both arm rests (10) of the pram at least one integrated holding fixture (11) is provided for the form-fit or force-fit affixation of the insertion part (12) of the parasol.

2. The pram according to claim 1, **characterized in that** each holding fixture (11) for the insertion part (12) is a recess which is integrated into the arm rest (10) or arm rests (10).

3. The pram according to claim 1 or 2, **characterized in that** the connection areas between the respective holding fixture (11) and the insertion part (12) are designed as a type of connector assembly, bayonet joint, or the like.

4. The pram according to one or several of the preceding claims, **characterized in that** the insertion part (12) is formed by insert moulding the free end area of the pole (13) and that the insertion part is made of a plastic material and is designed as a plastic moulded part.

## Revendications

1. Poussette avec un châssis, un guidon, une capote et un siège ou couffin, sur laquelle sont placés des accoudoirs disposés latéralement et sur laquelle un parasol peut être positionné, dont le manche est fixé dans un élément d'insertion, **caractérisée en ce que**, dans un accoudoir (10) ou dans les deux accoudoirs (10) de la poussette, au moins un logement (11) intégré est prévu pour la fixation par liaison de forme ou par liaison de force de l'élément d'insertion (12) du parasol.

2. Poussette selon la revendication 1, **caractérisée en ce que** chaque logement (11) pour l'élément d'insertion (12) est un évidement intégré dans l'accoudoir (10) ou dans les accoudoirs (10).

3. Poussette selon la revendication 1 ou 2, **caractérisée en ce que** les zones de liaison entre le logement respectif (11) et l'élément d'insertion (12) sont conçues sous la forme d'un élément de connexion enfichable, d'une fixation à baïonnette, ou assimilés.

4. Poussette selon une ou plusieurs des revendications précédentes, **caractérisée en ce que** l'élément d'insertion (12) est formé par injection autour de l'extrémité libre du manche (13), et **en ce que** l'élément d'insertion se compose d'une matière plastique et est formé comme élément moulé en plastique.
